# EUROPEAN PATENT APPLICATION

(11) **EP 4 675 450 A1**
(43) Date of publication of application: **07.01.2026**
(21) Application number: 25170222.1
(22) Date of filing: 11.04.2025
(51) Int. Cl.: G06F 15/167

(54) **DETERMINISTIC MULTICORE SOFTWARE ARCHITECTURE**

(30) Priority: 01.07.2024 US 202463666501 P; 07.04.2025 US 202519171797
(71) Applicant: General Electric Company, Cincinnati, Ohio 45215 (US)
(72) Inventor: AMBROSE, Christopher, Evendale, 45215 (US); DAY, Christopher, Evendale, 45215 (US); ROPER, Simon, Evendale, 45215 (US)
(74) Representative: Openshaw & Co.

(57) **Abstract**

A system for multi-core deterministic processing includes a processor (420) and a memory (430) comprising instructions which, when executed by the processor, cause the system to synchronize a first processor core (core 0) and a second processor core (core 1) in time for alternating access to a first shared memory (global RAM #1) and a second shared memory (global RAM #2). During a first time frame, the first processor core accesses the first shared memory and the second processor core accesses the second shared memory. During a second time frame, the first processor core accesses the second shared memory and the second processor core accesses the first shared memory. The system may further include dedicated memory (RAM #1, RAM #2) associated with each core, a third processor core (core n) with corresponding memory (RAM #z, global RAM #x), and support for communication and I/O peripherals. The architecture mitigates memory access interference by applying alternating memory access intervals to ensure deterministic operation in safety-critical systems.

## Description

This application claims the benefit of U.S. Provisional Patent Application Serial No. 63/666,501, filed July 1, 2024, the entire contents of which are hereby incorporated by reference.

This application was developed with support from the HICLASS project, funded by Innovate UK.

### TECHNICAL FIELD

The present disclosure relates to software architectures for achieving deterministic execution in real-time systems using multicore processors, particularly in safety-critical domains such as aviation.

### BACKGROUND

For certain applications (e.g., aviation operations, automotive operations, and rail operations) processors may execute operations in a deterministic manner. For this reason, many aviation related functions are performed by single core processors.

Current processors typically include multiple processor cores. However, processing performed by multiple cores may result in non-deterministic operations. Accordingly, for aviation operations, additional cores may be deactivated for processing.

### BRIEF DESCRIPTION OF THE DRAWINGS

Illustrative embodiments may take form in various components and arrangements of components. Illustrative embodiments are shown in the accompanying drawings, throughout which like reference numerals may indicate corresponding or similar parts in the various drawings. The drawings are only for purposes of illustrating the embodiments and are not to be construed as limiting the disclosure. Given the following enabling description of the drawings, the novel aspects of the present disclosure should become evident to a person of ordinary skill in the relevant art(s).
Figure 1 illustrates a system according to an exemplary embodiment;
Figure 2 is an example timing diagram according to the system of Figure 1;
Figure 3 is a flow diagram of a method of synchronizing processor cores, in accordance with one embodiment; and
Figure 4 illustrates a device in accordance with an exemplary embodiment.

### DETAILED DESCRIPTION

Prior to discussing the drawings of the present disclosure at length, several terms and concepts are covered in order to facilitate the detailed description of the exemplary embodiments depicted in the drawings. It is noted that however that these terms and concepts do not limit the disclosure and that one of ordinary skill in the relevant art(s) will readily recognize modifications and changes applicable to the following ancillary systems and/or concepts that do not limit the scope of the present teachings.

As mentioned above, achieving a deterministic solution for using multiple cores within a multicore processor, for high design assurance level (DAL) aviation programs may enable the use of multicore processors in aviation operations. However, multicore processors include shared resources (e.g., memory) which cannot be avoided if multiple cores perform work. Access to shared resources without mitigation, including those that might not be documented by a processor manufacturer, may result in non-deterministic execution time for the software executing on the processor or processors. This could result in systems that may acquire necessary certification for aviation operations.

Accordingly, although further detail will be provided below, described herein is a software architecture whereby the interference caused by the potentially non-deterministic characteristics of multi-core processors (e.g., shared memory, interconnects, and peripherals within the silicon) is mitigated simultaneously by multiple methods to provide a certifiable software solution for high and mixed DAL applications.

In various embodiments, a single core (e.g., communications and input-output (IO) core) may be used to control peripherals/peripheral components on a single physical bus removing interference that would occur if that bus were to be accessed by multiple cores.

In various embodiments, a shared memory access mechanism is implemented to communicate to and from one or more additional cores (e.g., application cores/application processors) to the communications and IO core. In various embodiments, a frame-based approach (e.g., tick frame/tock frame) using alternating time intervals is utilized to remove interference from shared memory access.

In various embodiments, the combination of the above architecture/technique provides a non-interfering and deterministic communications channel to/from the application cores to the communications and IO core and to the peripherals themselves.

In order for a processor to perform useful work, it accesses external IO to obtain data and/or communicate results or actions. To use multiple cores within a multicore processor, data needs to be shared between the cores for them to perform useful work. For work to be deterministic it is performed within a defined time boundary, at regular intervals, referred to as frames. Accordingly, interference may be removed, inclusive of temporal partitioning and physical isolation.

In various embodiments, all cores utilize a defined synchronization event, for example through all operating at the same frequency, such that they can be synchronized prior to executing their normal operation, which may be referred to as frame frequency matching.

In various embodiments, boot time core synchronization is performed. That is, upon pre-entry to normal operation, all cores synchronize their frames and use different memory regions.

In various embodiments, all cores utilize an overframe detection mechanism to prevent the system getting out of synchronization and multiple cores accessing the same memory simultaneously.

In various embodiments, processor architecture utilizes inadvertent access detection for any bus controller accessing a disabled interface, be that memory region or peripheral. This detection mechanism prevents this access and manage the bus controller appropriately.

In various embodiments, a single external peripheral controller may be utilized. For example, where peripherals are accessed via a shared bus, the architecture includes a singular core acting as the primary controller to the external interfaces of the processor, be that for communications buses or I/O. Other cores are defined as application-specific cores, processing the data obtained by the primary IO core. Providing there is sufficient frame time, the I/O core may be utilized to execute application-specific functionality.

In various embodiments, a temporally managed dedicated memory access mechanism may be utilized, in which memory access alternates between processor cores across consecutive execution intervals (e.g., alternating time frames / alternating memory access intervals). For example, regions of memory are utilized which can be dedicated to a core on a frame-by-frame basis. On every first or second frame (e.g., tick frame or tock frame), cores alternate which memory region they will read/write to/from, which removes simultaneous access to memory peripherals, and therefore interference.

In various embodiments, normal operation core synchronization may be utilized. For example, if the processor utilized does not implement a method to deterministically ensure all cores will remain synchronized during normal operation, and/or software frames are not fixed and are free-running, a synchronization event may occur as part of normal operations, at the start/end of each core's regular functionality, to ensure cores do not go out of synchronization and attempt to talk to same peripheral simultaneously. This may include shareable semaphores between cores, or a small area of synchronization memory used for mutex/spinlocks which are read/write only during the synchronization point.

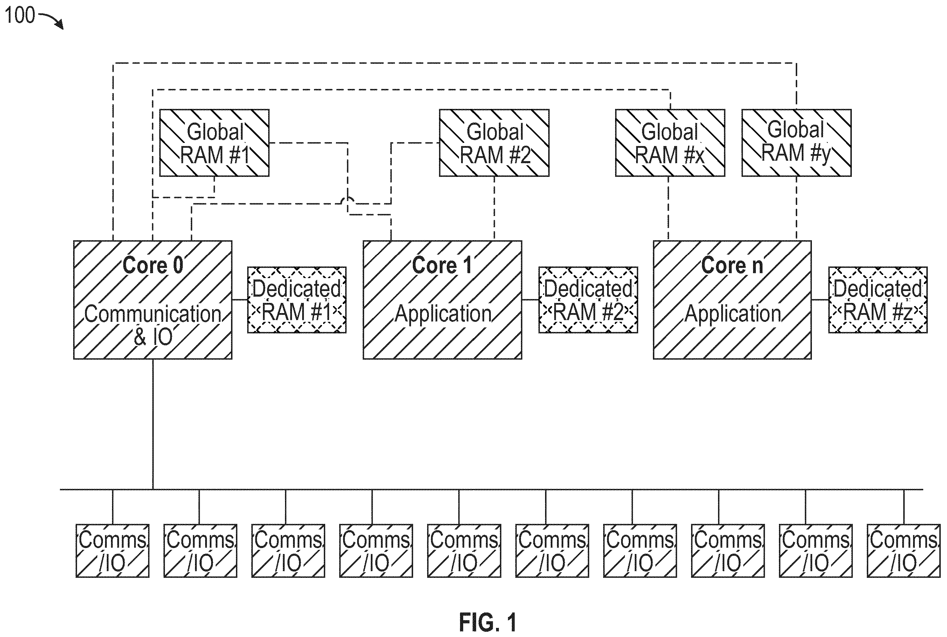

In accordance with the brief description, Figure 1 illustrates a system 100 according to an exemplary embodiment. As shown in Figure 1, the system 100 includes a number of processor cores (e.g., core 0, core 1, ..., core n). Each processor core includes associated dedicated memory (e.g., random access memory (RAM)). For example, core 0 (e.g., a first processor core/first processor) is associated with dedicated RAM#1, core 1 (e.g., a second processor core/second processor) is associated with dedicated RAM#2, and core n (e.g., a third processor core/third processor) is associated with dedicated RAM#z.

Additionally, in various embodiments, each core is associated with a shared memory (e.g., global RAM). For example, core 0 is associated with global RAM #1 (e.g., a first shared memory), #2 (e.g., a second shared memory), #x and #y. Core 1 is associated with global RAM #1 and #2, and core n is associated with global RAM #x (e.g., a third shared memory) and #y. It should be noted that the associations depicted in Figure 1 are exemplary and that other associations may exist.

In various embodiments, core 0 may include the communications and IO operation, while cores 1-n may include applications or communications via an independent internal bus. Accordingly, core 0 may be in communication over a BUS to communication and IO peripherals, which is independent to any other core accessing different IO peripherals.

In various embodiments, utilizing an alternating frame-based access mechanism, in which cores access shared memory resources in different, non-overlapping time intervals, ensures cores are not simultaneously communicating to the same memory. Data is shared with a single frame latency as one core writes to the memory; the second core reads it on the next frame. The architecture depicted in Figure 1 is scalable to any multi-core processor, providing that there are sufficient independent memory peripherals on the device to accommodate the cores, and simultaneous access to these separate memory peripherals can be achieved without incurring interference. This architecture improves worst-case execution time predictability and enables the use of multicore processors in high-integrity systems subject to certification constraints.

As shown in Figure 1, some cores access global memory during a first time frame, while others access global memory during a second, alternating time frame. These may be referred to as a "tick frame" and a "tock frame," respectively, for consistency with the accompanying figures. For example, core 0 accesses global RAM #1 and #x during the tick frame and global RAM #2 and #y during the tock frame. Core 1 accesses global RAM #2 during the tick frame and global RAM #1 during the tock frame. Core n accesses global RAM #y during the tick frame and global RAM #x during the tock frame.

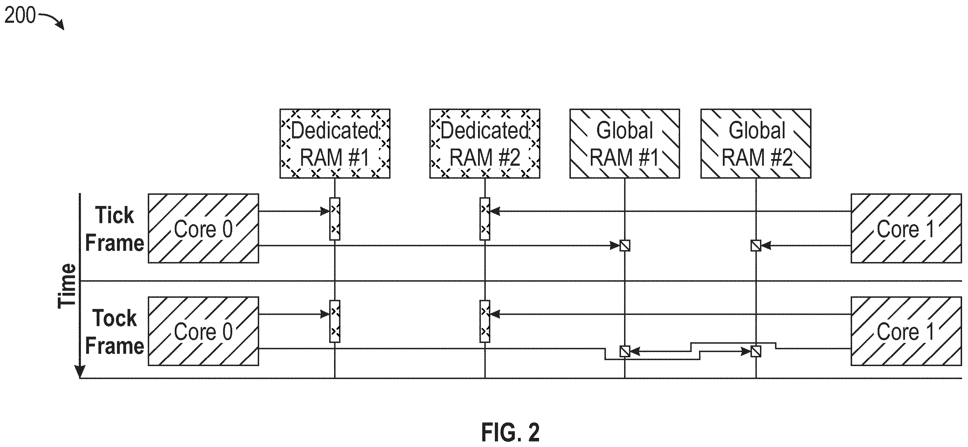

In accordance with the brief description, Figure 2 is an example timing diagram 200 according to the system 100 of Figure 1. As shown in Figure 2, core 0 accesses its own dedicated RAM (e.g., dedicated RAM #1) during both the tick and tock frames. During the tick frame (i.e., first time frame), core 0 accesses global RAM #1. During the tock frame (i.e., second time frame), core 0 accesses global RAM #2.

Core 1 accesses its own dedicated RAM (e.g., dedicated RAM #2) during both the tick and tock frames. During the tick frame (first time frame), core 1 accesses global RAM #2. During the tock frame (second time frame), core 1 accesses global RAM #1.

Accordingly, in various embodiments, during any frame, the cores use their own internal application memory for normal operation. During the tick frame (first time frame), core 0 reads/writes data to/from global RAM #1, while core 1 reads/writes data to/from global RAM #2. During the tock frame (second time frame), the memory access pattern is reversed: core 0 accesses global RAM #2 and core 1 accesses global RAM #1.

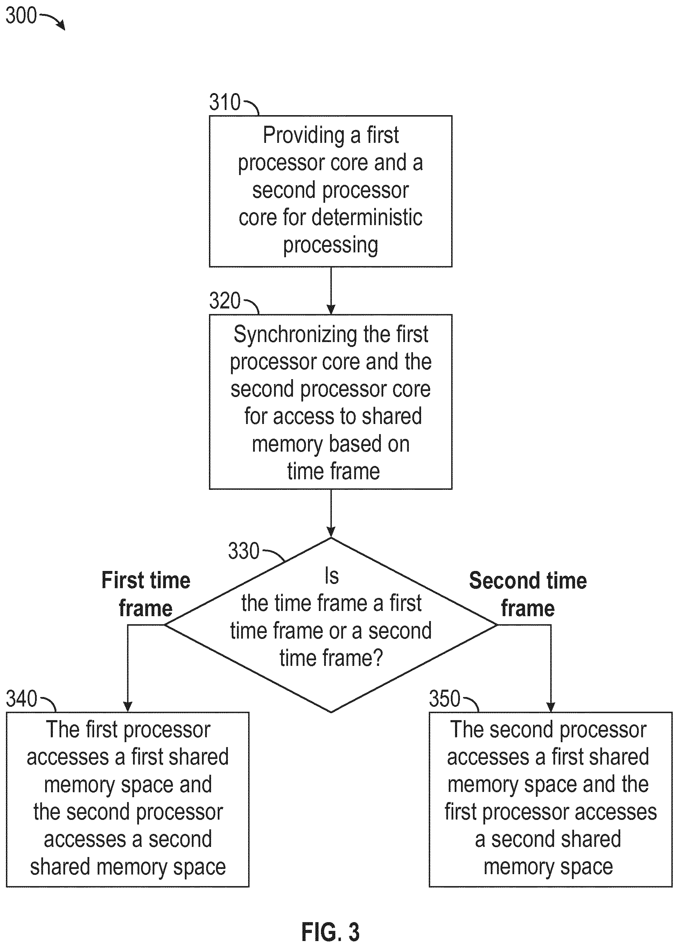

Figure 3 is a flow diagram of an example method 300 of synchronizing processor cores, in accordance with one embodiment.

At block 310, a first and second processor core are provided for deterministic processing. In various embodiments, the first processor core may be core 0 of Figure 1 and the second processor core may be core 1 of Figure 1.

The first and second processor cores are synchronized for access to shared memory based on a time frame at block 320. For example, in various embodiments, the first processor core may access a first shared memory space (e.g., global RAM #1) in a first time frame (e.g., a tick frame), while the second processor core accesses a different memory region or a second shared memory space (e.g., global RAM #2), and vice versa during a second time frame (e.g., a tock frame).

Accordingly, at block 330, if the time frame is a first time frame/interval, then the first processor accesses the first shared memory space and the second processor accesses the second shared memory space (block 340). If, at block 330, the time frame is a second time frame/interval, then the second processor accesses the first shared memory space and the first processor accesses the second shared memory space (block 350).

The method described above is exemplary and persons of skill in the art may appreciate that not all blocks may be performed, additional blocks, including additional operations may be performed, and/or the performance of the blocks in example method 300 may be performed in any order.

In various embodiments, some cores may be assigned processing work depending with different criticality. For example, core 0 may be assigned DAL A work, while core 1 may be assigned DAL E processing work. Persons of skill in the art may appreciate that any core may be assigned any DAL level processing work.

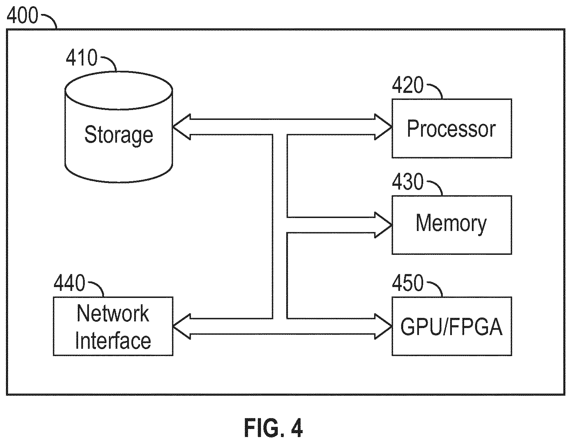

Figure 4 is a block diagram of a device 400 for implementing the system of Figure 1, in accordance with one embodiment. Referring now to Figure 4, exemplary components in the device 400 in accordance with aspects of the present disclosure include, for example, a database 410, one or more processors 420 (e.g., multicore processor cores), at least non-transitory one memory 430 (e.g., dedicated or global RAM), and a network interface 440. In aspects, the device 400 may also include a graphical processing unit (GPU) 450, which may be used for processing. Various components of device 400 may be utilized to carry out instructions to perform the operations described in blocks 310-350 of Figure 3. Further, device 400 may include communication circuitry capable of wired or wireless communication to receive data from other devices.

Database 410 can be located in storage. The term "storage" may refer to any device or material from which information may be capable of being accessed, reproduced, and/or held in an electromagnetic or optical form for access by a computer processor. Storage may be, for example, volatile memory such as RAM, non-volatile memory, which permanently holds digital data until purposely erased, such as flash memory, magnetic devices such as hard disk drives, and optical media such as a CD, DVD, Blu-ray Disc^{™}, or the like.

In various aspects, data may be stored on device 400, including, for example, user preferences, historical data, and/or other data. The data can be stored in database 410 and sent via the system bus to processor 420.

As described above, processor 420 may execute various processes based on instructions that can be stored in the memory 430 and utilizing the data from database 410. The illustration of Figure 4 is exemplary, and persons skilled in the art will be understood by other components that may exist in the device 400. Such other components are not illustrated in Figure 4 for clarity of illustration.

The aspects disclosed herein are examples of the disclosure and may be embodied in various forms. For instance, although certain aspects herein are described as separate aspects, each of the aspects herein may be combined with one or more of the other aspects herein. Specific structural and functional details disclosed herein are not to be interpreted as limiting, but as a basis for the claims and as a representative basis for teaching one skilled in the art to variously employ this disclosure in virtually any appropriately detailed structure.

The phrases "in an aspect," "in aspects," "in various aspects," "in some aspects," or "in other aspects" may each refer to one or more of the same or different aspects in accordance with this disclosure.

Approximating language, as used herein throughout the specification and claims, is applied to modify any quantitative representation that could permissibly vary without resulting in a change in the basic function to which it is related. Accordingly, a value modified by a term or terms, such as "about," "approximately," "generally," and "substantially" is not to be limited to the precise value specified. In at least some instances, the approximating language may correspond to the precision of an instrument for measuring the value, or the precision of the methods or the machines for constructing the components and/or the systems or manufacturing the components and/or the systems. For example, the approximating language may refer to being within a one, two, four, ten, fifteen, or twenty percent margin in either individual values, range(s) of values and/or endpoints defining range(s) of values.

As used herein, the terms "first time frame" and "second time frame" refer to alternating memory access intervals, i.e., cyclic time intervals during which specific cores are granted exclusive access to shared memory resources. The terms "tick frame" and "tock frame" are used interchangeably with "first time frame" and "second time frame," respectively, and serve as illustrative labels used in the figures.

Those skilled in the relevant art(s) will appreciate that various adaptations and modifications of the embodiments described above can be configured without departing from the scope and spirit of the disclosure. Therefore, it is to be understood that, within the scope of the appended claims, the teachings featured herein may be practiced other than as specifically described herein.

Further aspects of the present disclosure are provided by the subject matter of the following clauses.

A system for multi-core deterministic processing includes a processor and a memory including instructions which, when executed by the processor, cause the system at least to perform synchronizing a first processor core and a second processor core in time for access to a first shared memory and a second shared memory; causing, by the system, accessing by the first processor core of the first shared memory in a first time frame; causing, by the system, accessing by the second processor core of the second shared memory in the first time frame; causing, by the system, accessing by the first processor core of the second shared memory in a second time frame; and causing, by the system, accessing by the second processor core of the first shared memory in the second time frame.

The system according to any preceding clause, further including a first dedicated memory associated with the first processor core.

The system according to any preceding clause, further including causing, by the system, accessing by the first processor core of the first dedicated memory in the first time frame and the second time frame.

The system according to any preceding clause, further including a second dedicated memory associated with the second processor core.

The system according to any preceding clause, further including causing, by the system, accessing by the second processor core of the second dedicated memory in the first time frame and the second time frame.

The system according to any preceding clause, wherein the first time and the second time frames are alternating memory access intervals.

The system according to any preceding clause, wherein the first processor core is a communication and input/output (IO) processor core associated with one or more peripheral components.

The system according to any preceding clause, wherein the second processor core is an application processor for executing applications.

The system according to any preceding clause, further including synchronizing the first processor core and a third processor core in time for access to a third shared memory; causing, by the system, accessing by the third processor core of the third shared memory in the first time frame; and causing, by the system, accessing by the first processor core of the third shared memory in the second time frame.

The system according to any preceding clause, further including a third dedicated memory associated with the third processor core.

The system according to any preceding clause, further including causing, by the system, accessing by the third processor core of the third dedicated memory in the first time frame and the second time frame.

A processor-implemented method for multi-core deterministic processing includes synchronizing a first processor core and a second processor core in time for access to a first shared memory and a second shared memory; causing, by the system, accessing by the first processor core of the first shared memory in a first time frame; causing, by the system, accessing by the second processor core of the second shared memory in the first time frame; causing, by the system, accessing by the first processor core of the second shared memory in a second time frame; and causing, by the system, accessing by the second processor core of the first shared memory in the second time frame.

The processor-implemented method according to any preceding clause, further including associating a first dedicated memory with the first processor core.

The processor-implemented method according to any preceding clause, further including causing, by the system, accessing by the first processor core of the first dedicated memory in the first time frame and the second time frame.

The processor-implemented method according to any preceding clause, further including a second dedicated memory associated with the second processor core.

The processor-implemented method according to any preceding clause, further including causing, by the system, accessing by the second processor core of the second dedicated memory in the first time frame and the second time frame.

The processor-implemented method according to any preceding clause, wherein the first time and the second time frames are alternating memory access intervals.

The processor-implemented method according to any preceding clause, wherein the first processor core is a communication and input/output (IO) processor core associated with one or more peripheral components.

The processor-implemented method according to any preceding clause, wherein the second processor core is an application processor for executing applications.

The processor-implemented method according to any preceding clause, further including synchronizing the first processor core and a third processor core in time for access to a third shared memory; causing, by the system, accessing by the third processor core of the third shared memory in the first time frame; and causing, by the system, accessing by the first processor core of the third shared memory in the second time frame.

It should be understood that the description herein is only illustrative of this disclosure. Various alternatives and modifications can be devised by those skilled in the art without departing from the disclosure. Accordingly, this disclosure is intended to embrace all such alternatives, modifications, and variances. The aspects described are presented only to demonstrate certain examples of the disclosure. Other elements, steps, methods, and techniques that are insubstantially different from those described above and/or in the appended claims are also intended to be within the scope of the disclosure.

## Claims

1. A system for multi-core deterministic processing, the system comprising:
a processor (420);
a memory (430) including instructions which, when executed by the processor (420), cause the system at least to perform:
synchronizing a first processor core (core 0) and a second processor core (core 1) in time for access to a first shared memory (global RAM #1) and a second shared memory (global RAM #2);
causing the first processor core to access the first shared memory in a first time frame;
causing the second processor core to access the second shared memory in the first time frame;
causing the first processor core to access the second shared memory in a second time frame; and
causing the second processor core to access the first shared memory in the second time frame.

2. The system according to claim 1, further comprising a first dedicated memory (RAM #1) associated with the first processor core.

3. The system according to claim 2, wherein the instructions, when executed by the processor (420), further cause accessing by the first processor core of the first dedicated memory in the first time frame and the second time frame.

4. The system according to any of claims 2 or 3, further comprising a second dedicated memory (RAM #2) associated with the second processor core.

5. The system according to claim 4, wherein the instructions further cause accessing by the second processor core of the second dedicated memory in the first time frame and the second time frame.

6. The system according to any one of the preceding claims, wherein the first time frame and the second time frame are alternating memory access intervals.

7. The system according to any one of the preceding claims, wherein the first processor core is a communication and input/output (IO) processor core associated with one or more peripheral components.

8. The system according to claim 7, wherein the second processor core is an application processor for executing applications.

9. The system according to any one of the preceding claims, further comprising:
synchronizing the first processor core and a third processor core (core n) in time for access to a third shared memory (global RAM #x);
causing the third processor core to access the third shared memory in the first time frame; and
causing the first processor core to access the third shared memory in the second time frame.

10. The system according to claim 9, further comprising a third dedicated memory (RAM #z) associated with the third processor core.

11. The system according to claim 10, wherein the instructions further cause accessing by the third processor core of the third dedicated memory in the first time frame and the second time frame.

12. A processor-implemented method for multi-core deterministic processing, the method comprising:
synchronizing a first processor core and a second processor core in time for access to a first shared memory and a second shared memory;
causing the first processor core to access the first shared memory in a first time frame;
causing the second processor core to access the second shared memory in the first time frame;
causing the first processor core to access the second shared memory in a second time frame; and
causing the second processor core to access the first shared memory in the second time frame.

13. The method according to claim 12, further comprising associating a first dedicated memory with the first processor core and causing the first processor core to access the first dedicated memory in the first and second time frames.

14. The method according to claim 13, further comprising associating a second dedicated memory with the second processor core and causing the second processor core to access the second dedicated memory in the first and second time frames.

15. The method according to any one of claims 12 to 14, wherein the first and second time frames are alternating memory access intervals.
